# EUROPEAN PATENT APPLICATION

(11) **EP 2 792 930 A2**
(43) Date of publication of application: **22.10.2014**
(21) Application number: 14164546.5
(22) Date of filing: 14.04.2014
(51) Int. Cl.: F17C 3/00, F17C 13/02

(54) **membrane for a gasometric dome**

(30) Priority: 18.04.2013 IT CR20130012
(71) Applicant: Ecomembrane S.R.L., 26030 Gadesco Pieve Delmona (CR) (IT)
(72) Inventor: Spedini, Luigi, 26100 Cremona (IT); Spedini, Lorenzo, 26100 Cremona (IT)
(74) Representative: Marcio', Paola

(57) **Abstract**

The present invention relates to the field of membrane gas holders, or gasometers, particularly of the type that can be used to store biogas (organic gas) generated through the digestion of sludge, slurry and organic substances in general, or for storing gas emitted from slurry storage tanks containing fermentable matter.

More in detail, the invention relates to an elastically stabilized gasometric dome (1) for a tank (2) containing liquid (3), adapted to delimit, between the surface of said liquid (3), the walls (2') of the tank and the dome, a variable volume storage chamber (4) for gas, wherein said gasometric dome (1) comprises:
- a gas impermeable flexible membrane (5);
- continuous fastening means (6) of an edge (5') of said membrane (5) to a rim (2") of said tank (2).

Said membrane (5) is made of an inextensible material, having an extension of the surface thereof greater than that of the surface delimited by the rim (2") of said tank (2), and said gasometric dome (1) comprises a plurality of linear elastic elements (7) arranged orthogonally with respect to the rim (2") of said tank (2), adapted to cooperate with said membrane (5) to allow elastic expansion and contraction of said gasometric dome (1) and ensure the stability thereof.

## Description

The present invention relates to the field of membrane gas holders, or gasometers, particularly of the type that can be used to store biogas (organic gas) generated by the digestion of sludge, slurry and organic substances in general, or for storing gas emitted from slurry storage tanks containing fermentable matter.

More in detail, the invention relates to an elastically stabilized membrane gasometric dome, of the type suitable to be fastened directly to the rim of a tank with concrete walls containing slurry or sludge in anaerobic fermentation, or simply water, so as to define a storage chamber for the gas released and/ or stored between the membrane, the walls of the tank and the surface of the liquid contained.

The membranes currently used for the construction of elastically stabilized gasometric domes are made with a particular synthetic rubber of EPDM (Ethylene-Propylene Diene Monomer) type, with the trade name BIOLENE^{®}.

In parkicular, these membranes are made by welding, gluing or vulcanizing together a plurality of strips of material to create an elastic sheet, which is then fastened, with gas- and liquid-tight seal, to the rim of the tank.

Normally, the tank also acts as anaerobic digester for the production of biogas from liquid manure containing fermentable organic substances.

The digester comprises a composite wooden roof that provides thermal insulation, acts as a medium for a desulphurizing bacterial flora and supports the elastic sheet when it is not yet supported by the gas pressure.

The membrane is fastened with a pneumatic/mechanical system with interference fit: a dovetail-shaped groove is produced on the rim of the tank through a plastic profile adapted to reproduce the shape of said groove, and the edge of the membrane and a retaining element are subsequently inserted therein,

Said retaining element is generally produced by means of a pneumatic gasket, i.e. a rubber tube positioned in the groove and subsequently inflated with air, so that it expands to fill the groove completely, preventing the edge of the membrane from slipping off and the gas from escaping.

For correct use of said gasometers and/or digesters, it is necessary to know the degree to which the storage chamber is filled with gas, for management and regulation of the gas holder, for use of the gas during normal operation, and for the safety of the whole system.

Currently, it is possible to assess the level to which the storage chamber is filled by measuring the internal pressure value reached, in relation to the maximum and minimum pressure values that the gasometer is able to reach, since the elastic material causes an internal variation of the storage pressure, between a minimum value of zero with the gasometer empty and the elastic sheet lying on the roof and a maximum value, typically of a few millimeters of water column, when the gasometer is full and the sheet takes the shape of a low dome.

Alternatively, it is possible to connect to the top of the gasometric dome, by means of an inextensible cable, a signal indicator that moves, rising or falling, according to the shape of the dome determined by the level of filling of the storage chamber. Measurement of said movement is indicative of the filling level.

The domes currently used and described above have some limits and drawbacks, due to the material used to produce the membrane, to the way it is fastened to the rim of the storage tank and to the methods used to assess the level of filling of the gasometric dome.

The elastic membrane used is subject to continuous stress due to the expansion and retraction cycles to which it is subjected: in the long term the material loses its elastic properties and yields, passing from a reversible elastic behavior to a plastic behavior characterized by the development of irreversible deformations that do not return when the cause of the stress is removed.

Even more disadvantageously, when the material yields it becomes unstable, losing consistency until it exhibits a sail effect, with the risk of being ripped off by the wind.

EPDM rubber is a material that, due to its natural black color, attracts the sun's rays and tends to overheat. Besides overheating of the membrane due to the sun, thermal deterioration can also be caused by the temperatures inside the storage chamber, which can reach up to 50-60 °C, causing further aging of said membrane.

EPDM is a material that also suffers from adverse weather conditions, above all from the UV rays of solar radiation, and risks being damaged internally through the aggressive action of the chemical agents released by the gases produced by fermented sludge and slurry, which in the long term can cause degeneration of the material, causing it to lose its impermeable properties and even to rupture.

With regard to the method of fastening the membrane to the rim of the tank, there is no guarantee that the mechanical seal, and even worse, the gas seal, will remain constant over time.

Moreover, the fastening system described above requires considerable energy consumption: in fact, a compressor must operate constantly to deliver compressed air to the tube that acts as a gasket and retains the edge of the membrane in the special groove.

Even more disadvantageously, in the event of black-out or a power outage, situations which can easily occur during storms or adverse weather conditions, the strength of the membrane and the functionality of the fastening system can be compromised: adverse weather conditions, such as strong winds, can in fact cause the edge of the membrane to become detached, tom off or simply to escape from the groove of the rim of the tank, with considerable damage for the gasometer.

Conventional methods used to measure the amount of gas inside the storage chamber also have some disadvantages: linking assessment of the filling level to the maximum and minimum pressure values that can be reached in the storage chamber can be a method that is not certain and reliable over time. In the long term, such measurement loses precision, due to the fact that the elasticity of the material and its physical-mechanical properties change, as described above.

The use of a signal element movable as a result of rising and lowering of the dome offers limited information, as in this case only two extreme values are provided, corresponding to the maximum and minimum expansion of the dome, detected by two microswitches, and does not allow constant monitoring of the level of filling of the storage chamber.

Aim of the present invention is to eliminate the drawbacks and disadvantages mentioned above.

The main aim of the present invention is to produce an elastically stabilized gasometric dome that is resistant to adverse weather conditions, chemical aggression by the gases released in the storage chamber, sudden changes in temperature to which the membrane is subjected, which is long lasting and requires minimum maintenance, so that the characteristics and properties of its components remain unaltered.

A further aim of the invention is to produce a gasometric dome with a fixing system between the continuous edge of the membrane that forms the gasometric dome and the rim of the corresponding storage tank that is also resistant and reliable over time, guarantees maximum mechanical seal and perfect gas impermeability, is easy to lay and assemble, and does require energy consumption in order to operate.

Another aim of the invention is to produce a gasometric dome with a device adapted to continuously measure the quantity of gas contained in the storage chamber, adapted to provide an accurate measurement, with unique correspondence between the value measured by the instrument and the true quantity of gas contained in the storage chamber.

Said aims are achieved with an elastically stabilized gasometric dome for a tank containing a liquid, adapted to delimit, between the surface of said liquid, the walls of the tank and the dome, a variable volume storage chamber for gas, wherein said gasometric dome comprises:
- a gas impermeable flexible membrane;
- continuous fastening means of an edge of said membrane to a rim of said tank;
   characterized in that said membrane is made of inextensible material, having an extension of the surface thereof greater than that of the surface delimited by the rim of said tank, and said gasometric dome comprises a plurality of linear elastic elements, arranged orthogonally with respect to the rim of said tank, adapted to cooperate with said membrane to allow elastic expansion and contraction of said gasometric dome and ensure the stability thereof.

According to a preferred embodiment of the invention, said linear elastic elements have a first end associated with the rim of said tank and a second end associated with said membrane.

Advantageously, the second end of said elastic elements is associated with said membrane along a closed line, parallel to the rim of said tank, intermediate between the edge and the top of said membrane.

According to an even more preferred embodiment of the invention, said linear elastic elements are pretensioned to give stability to the membrane even when the storage chamber is empty or in the initial filling stage.

According to one embodiment of the invention, said linear elastic elements comprise helical springs protected by tubular sheathes made of a sheet in liquid impermeable material.

According to further embodiments of the invention, said inextensible membrane is made of woven fabric or nonwoven fabric composed of natural or man-made fibers and coated with plastic polymers selected from PVC, polyurethane, polyethylene, etc.

In a particular embodiment of the invention, said fastening means of the edge of the membrane to the rim of the storage tank comprise a steel profile adapted to retain, by means of anchor bolts and nuts, said edge against the rim of said tank.

In particular, said fastening means comprise a gas-tight gasket interposed between the rim of said tank and said steel profile.

Moreover, some of said anchor bolts comprise on the free top thereof a coupling ring for the first end of said elastic elements.

In an even more preferred embodiment of the invention, said gasometric dome comprises means for measuring the level of filling of said storage chamber produced by said gasometric dome.

In particular, said means for measuring the level of filling of said storage chamber comprise a load cell sensor.

The present invention has numerous advantages.

The use of a flexible and inextensible membrane coupled to linear elastic elements ensures strength and stability to the entire gasometric dome and allows correct and safe expansion and contraction of the gas storage chamber.

Through the linear elastic elements connected in several points of the membrane and along the fastening line of its edge to the rim of the tank, the gasometric dome has greater stability and safety against adverse weather conditions, and is suitable to cover tanks of any shape.

Said elastic elements are particularly suitable to absorb the stresses caused by work cycles or by external agents operating on the membrane, so as to prevent tearing or damage of the membrane and avert the danger of gas leaks.

Preloading of the elastic elements gives stability to the membrane even when the storage chamber is empty or in the initial filling stage.

The use of an inextensible flexible membrane considerably widens the possibility of choice of materials that can be used, it being possible to use fabrics coated with plastic polymers selected according to the requirements and to the design conditions, taking into account the degree of strength that the membrane must have in relation to mechanical actions, weather conditions, UV rays, substances released inside the storage tank, temperatures reached internally and externally, etc.

The use of an inextensible material and the possibility of choosing elastic elements with appropriate yield strength eliminates, even more advantageously, problems caused by yielding of conventional elastic membranes, the physical-mechanical properties of which varied over time, compromising correct operation of the gasometric dome.

Further advantages of the invention relate to the fixing system of the edge of the membrane to the rim of the tank which, with respect to conventional fastening systems, ensures improved gas-tightness, optimal resistance to the wind and has no energy consumption.

Further advantages of the invention derive from the use of a load cell adapted to measure the level of filling of the gasometric dome: detection takes place continuously and returns an absolute and certain value, regardless of the external conditions and of the wear degree of the membrane.

These and other advantages will be more apparent and evident from the description of the invention, set forth below with the aid of the drawings, which represent an example of implementation, illustrated by way of non-limiting example, wherein:
Figs. 1 and 2 represent, respectively in a vertical section and in a top plan view, an elastically stabilized gasometric dome according to the invention applied to a tank containing a liquid;
Fig. 3 represents, in a top plan view, a detail of the gas holder dome according to a preferred embodiment of the invention;
Figs. 4 and 5 represent, in section, details of the fastening means used in the invention;
Figs. 6 and 7 represent, respectively in a front and side view, details of the means for measuring the level of filling of the storage chamber used in the invention.

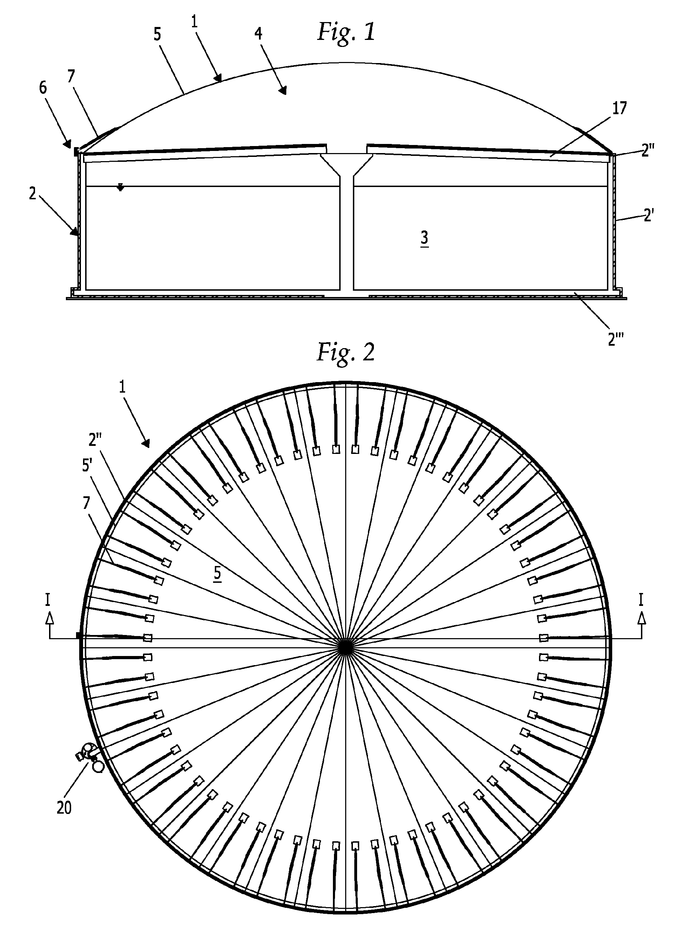

With reference to Figs. 1 and 2, there is illustrated an elastically stabilized gasometric dome 1 for a tank 2 acting as anaerobic digester containing a liquid 3 rich in fermentable organic substances, for example an agricultural slurry or an organic sludge.

Said tank 2, having a circular section, is composed of a base 2'" and of two lateral walls 2' and is closed at the top by said gasometric dome 1.

In particular, said gasometric dome 1 is adapted to delimit a chamber 4 with variable volume, arranged to store the biogas produced by anaerobic digestion of the slurry 3 contained in the tank 2.

Said storage chamber 4 is substantially comprised between the surface of the liquid 3, the walls 2' of the tank 2 and the inner surface of the dome.

Between said gasometric dome 1 and the liquid 3 contained in the tank 2 there is interposed a supporting structure 17 for the deflated gasometric dome 1, which can be made of wood or another suitable material.

Said gasometric dome 1 essentially comprises a gas impermeable flexible membrane, adapted to cover the surface of said tank 2, provided with continuous fastening means 6 of its edge 5' to the rim 2" of said tank 2.

Said membrane 5 is made of an inextensible material, having a surface extension greater than that of the surface delimited by the rim 2" of said tank 2.

Said membrane 5 can be made of woven fabric or nonwoven fabric, again with inextensible properties, composed of natural or man-made fibers and coated with plastic polymers, for example selected from PVC, polyurethane, polyethylene, etc.

In the embodiment illustrated, said membrane 5 is made with strips of material, welded together with a high frequency electronic system.

In the example described and illustrated, the material is a fabric made of polyester fibers coated with PVC on both sides, with the addition of an antifungal treatment, to ensure maximum resistance to weather conditions, to UV rays and to the aggression of the biogas.

The electronic welding system used to produce said membrane allows the PVC to be melted locally, without heating the fabric and consequently without damaging it.

Said gasometric dome 1 also comprises a plurality of linear elastic elements 7, arranged discretely orthogonally with respect to the rim 2" of said tank 2, adapted to cooperate with said membrane 5 to allow elastic expansion and contraction of said gasometric dome 1 and ensure the stability thereof.

In the embodiment illustrated, said linear elastic elements 7 comprise galvanized steel helical springs 8 protected by tubular sheathes 18 made of a sheet in plastic material.

In particular, if the tank 2 has a circular rim 2", said linear elastic elements 7 are arranged radially along the rim 2" of said tank 2 and have a first end 7' associated with said rim 2" and a second end 7" associated with said membrane 5.

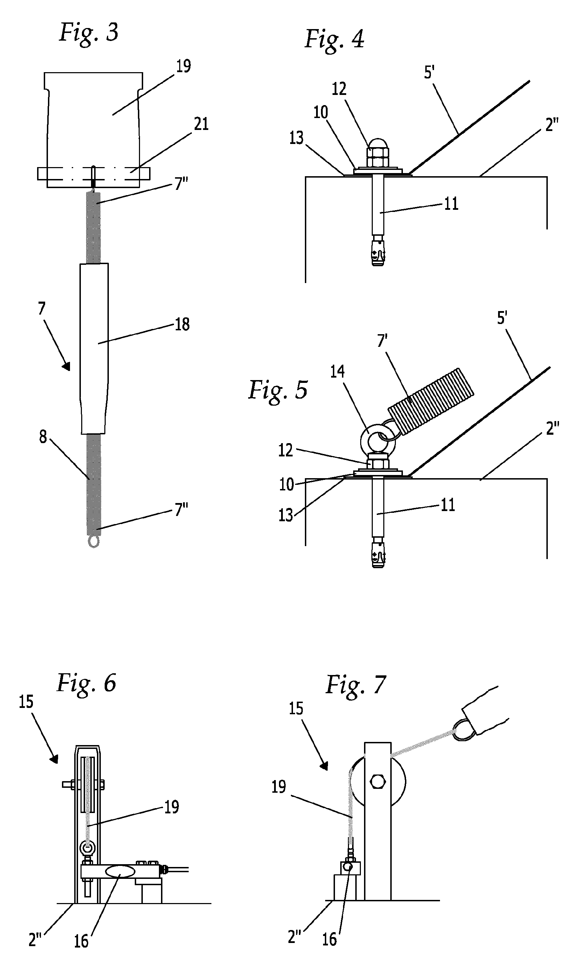

With reference to the detail of Fig. 3, in the fixing point of the end 7" of said elastic elements 7 to the membrane 5, this latter is provided with a PVC pocket 19, adapted to strengthen the membrane, contained inside which is a metal tube 21 adapted to act as fastener for the second end 7" of the elastic elements 7, to prevent tearing and damage of the membrane 5.

As it is evident from Figs. 1 and 2, said elastic elements 7 are associated with said membrane 5 along a line, parallel to the rim 2" of said tank 2, intermediate between the edge 5' and the top of said membrane 5.

Optimal stabilization is obtained using helical springs 8 of 1 m in length, fastening the second end thereof at a circumference at a distance of 1.15 m from the rim of the tank, so as to pretension said springs 8 to give stability to the membrane 5 even when the storage chamber 4 is empty or in the initial filling stage, and manufacturing the membrane 5 so that its excess allows elongation of the springs 8 up to 1.80 m and, when the membrane 5 rests on the supporting structure 17, all the folds and the loops are contained between the tank rim 2" and the line defined by the fixing points of the springs 8 to the membrane 5.

As stated above, the inextensible membrane 5 is mechanically fastened to the rim 2" of the tank 2.

In particular, as shown in the details Figs. 4 and 5, said fastening means 6 of the edge 5' of the membrane 5 to the rim 2" of the tank 2 comprise a steel profile 10, adapted to retain, by means of anchor bolts 11 and nuts 12, said edge 5' to said rim 2" of said tank 2.

To ensure perfect gas-tightness of the gasometric dome 1, said fastening means 6 also comprise specific gaskets 13 interposed between the rim 2" of said tank 2 and said steel profile 10.

Said anchor bolts 11 are also used to fix the first end 7' of the linear elastic elements 7 to the rim 2" of the tank 2.

In fact, some anchor bolts 11 comprise on the free top thereof a coupling ring 14, or eyebolt, inside which the end 7' of the elastic elements 7 is secured.

In the particularly preferred embodiment of the invention, as shown in the figures, said gasometric dome 1 also comprises means for measuring 15 the level of filling of the storage chamber 4 produced thereby.

With reference to the details of Figs. 6 and 7, said means for measuring 15 the level of filling of said storage chamber 4 comprise an electronic device for continuously measuring the level reached by the gases, using a load cell sensor 16, to which there is attached a stainless steel elastic chain/spring unit 19 fastened laterally to the gasometric dome 1, at the tank rim 2".

The load transmitted from the elastic unit 19 is praportional to the position of the storage chamber 4 and varies from a minimum load, corresponding to minimum filling and the membrane 5 being empty, to a maximum load corresponding to maximum filling of the chamber 4 and the maximum internal pressure being reached.

Said electronic device then issues a 4-20mA signal suitable to be connected to a PLC present in the control panel of the system.

Finally, said gasometric dome 1 comprises a hydraulic guard valve 20 that produces the safety system against overpressure of the biogas, according to the prior art.

In conformity with the present invention, when the gasometric dome 1 is assembled on the tank 2, the membrane 5 is flat against the supporting structure 17 and the preloaded springs 8 stabilize the structure, maintaining the central portion of the membrane 5 taut, gathering all the excess membrane in the portion comprised between the tank rim 2" and the fixing line of the second end 7" of the springs 8 to the membrane 5.

As the gas fills the storage chamber 4, the central portion of the membrane 5 rises and the springs 8 are elastically elongated offering a tensile strength that stabilizes the gasometric dome 1 in any stage and with any shape.

When the chamber 4 has reached the maximum volume, the springs 8 are stretched to their maximum extension, the internal pressure reaches the maximum value and the final shape of the gasometric dome 1 is that determined by manufacture of the membrane 5.

Beyond this limit, gas will be discharged through the overpressure safety system.

## Claims

1. An elastically stabilized gasometric dome (1) for a tank (2) containing liquid (3), adapted to delimit, between the surface of said liquid (3), the walls (2') of the tank and the dome, a variable volume storage chamber (4) for gas, wherein said gasometric dome (1) comprises:
- a gas-impermeable flexible membrane (5);
- continuous fastening means (6) of an edge (5') of said membrane (5) to a rim (2") of said tank (2);
**characterized in that** said membrane (5) is made of an inextensible material, having an extension of the surface thereof greater than that of the surface delimited by the rim (2") of said tank (2), and said gasometric dome (1) comprises a plurality of linear elastic elements (7) arranged orthogonally with respect to the rim (2") of said tank (2), adapted to cooperate with said membrane (5) to allow elastic expansion and contraction of said gasometric dome (1) and ensure the stability thereof.

2. The elastically stabilized gasometric dome (1) according to claim 1, **characterized in that** said elastic elements (7) have a first end (7') associated with the rim (2") of said tank (2) and a second end (7") associated with said membrane (5).

3. The elastically stabilized gasometric dome (1) according to claim 2, **characterized in that** the second end (7") of said elastic elements (7) is associated with said membrane (5) along a closed line, parallel to the rim (2") of said tank (2), intermediate between the edge (5') and the top of said membrane (5).

4. The elastically stabilized gasometric dome (1) according to claim 1, **characterized in that** said linear elastic elements (7) are pretensioned to give stability to the membrane (5) even when the storage chamber (4) is empty or in the initial filling stage.

5. The elastically stabilized gasometric dome (1) according to claim 1, **characterized in that** said linear elastic elements (7) comprise helical springs (8) protected by tubular sheathes (9) made of a sheet in liquid impermeable material.

6. The elastically stabilized gasometric dome (1) according to claim 1, **characterized in that** said inextensible membrane (5) is made of woven fabric or nonwoven fabric composed of natural or man-made fibers and coated with plastic polymers selected from PVC, polyurethane, polyethylene, etc.

7. The elastically stabilized gasometric dome (1) according to claim 1, **characterized in that** said fastening means (6) of the edge (5') of the membrane (5) to the rim (2") of the tank (2) comprise a steel profile (10) adapted to retain, by means of anchor bolts (11) and nuts (12), said edge (5') against the rim (2") of said tank (2).

8. The elastically stabilized gasometric dome (1) according to claim 7, **characterized in that** said fastening means (6) comprise a gas-tight gasket (13) interposed between the rim (2") of said tank (2) and said steel profile (10).

9. The elastically stabilized gasometric dome (1) according to claims 2 and 8, **characterized in that** some of said anchor bolts (11) comprise on the free top thereof a coupling ring (14) for the first end (7') of said elastic elements (7).

10. The elastically stabilized gasometric dome (1) according to claim 1, **characterized in that** it comprises means for measuring (15) the level of filling of the storage chamber (4) produced by said gasometric dome (1).

11. The elastically stabilized gasometric dome (1) according to claim 10, **characterized in that** said means for measuring (15) the level of filling of said storage chamber (4) comprise a load cell sensor (16).
